# EUROPEAN PATENT APPLICATION

(11) **EP 4 549 049 A1**
(43) Date of publication of application: **07.05.2025**
(21) Application number: 23306914.5
(22) Date of filing: 06.11.2023
(51) Int. Cl.: B22C 7/02, B22C 9/04, B33Y 70/00, B33Y 80/00

(54) **UV CURABLE HYBRID RESINS WITH IMPROVED GREEN STRENGTH**

(71) Applicant: ARKEMA FRANCE, 92800 Puteaux (FR)
(72) Inventor: GOLDMAN, Trevor, BOULDER, 80301 (US); DAVENPORT, Amelia, BOULDER, 80301 (US); ANDERSSON, Jonathan, BOULDER, 80301 (US); CRAMER, Neil, BOULDER, 80301 (US)
(74) Representative: Arkema Patent

(57) **Abstract**

A curable composition comprises a cationically polymerizable component, a sulfonium borate cationic photoinitiator, a radically polymerizable component, and a radical photoinitiator. The radically polymerizable component is present in the curable composition in an amount greater than or equal to 40% by weight, based on the total weight of the polymerizable components. The radically polymerizable component comprises a (meth)acrylate-functionalized monomer, a (meth)acrylate-functionalized oligomer, or both, each having at least two (meth)acrylate functional groups. The (meth)acrylate-functionalized monomer and the (meth)acrylate-functionalized oligomer are present in a combined amount greater than or equal to 50% by weight, based on the total weight of radically polymerizable component in the curable composition.

## Description

### FIELD OF THE INVENTION

The present disclosure relates to curable compositions and, more specifically, to curable compositions for three-dimensional printing applications.

### BACKGROUND OF THE INVENTION

One method for manufacturing metal parts involves investment casting, wherein a pattern is used to fabricate a mold made of a refractory material. A molten metal is then cast into the mold to form a part having a desired shape. Thus, in investment casting, a sacrificial foundry pattern is used to produce a mold in which metal parts can be cast. Various ways of forming and using such a sacrificial foundry pattern are known in the art. For example, a sacrificial foundry pattern may be formed from a substance, such as a wax. After being invested in a refractory material, the wax foundry pattern is then removed from the refractory material by melting, leaving behind a mold (cavity) in the refractory material.

There has been great interest in recent years in using curable compositions, e.g., actinically-curable compositions, in three-dimensional (3D) printing (also referred to as additive manufacturing) processes to fabricate articles that serve as sacrificial foundry patterns. Accordingly, there is a recognized need in the art for curable compositions that are both suitable for use in 3D printing processes and capable of curing into high-fidelity articles for the fabrication of molds for investment casting applications.

### SUMMARY OF THE INVENTION

The production of high-quality precision metal parts via investment casting requires the production and use of high-quality molds. In order to produce high-quality molds in an investment casting process, it is important that 3D printed articles used as sacrificial foundry patterns exhibit specific material properties. For example, 3D printed sacrificial foundry patterns exhibiting low strength or modulus may warp or break prior to and during the mold fabrication process, thereby causing the resulting mold cavity to deviate from the desired shape, which leads to poor dimensional accuracy for subsequently cast metal parts. Moreover, for the investment casting of large parts such as those used in aerospace applications (e.g., components for gas turbine engines), large molds must be produced, thereby requiring large 3D printed sacrificial foundry patterns. As gravitational and shrinkage related stresses are exacerbated in larger 3D printed patterns, high green strength and high green modulus are desired properties both during 3D printing and for the resulting 3D printed patterns. For example, during the 3D printing process, partially printed parts may fall apart or otherwise fail if the green strength is not sufficiently high. Many of the existing curable compositions are not suitable for producing large 3D printed sacrificial foundry patterns due to insufficient green strength and/or modulus, or require time- and resource-consuming post-processing steps to improve the mechanical properties of the 3D printed sacrificial foundry patterns.

Refractory materials used in investment casting processes are often initially formulated as an aqueous solution. 3D printed sacrificial foundry patterns exhibiting high water absorption may swell when in contact with such aqueous solutions, thereby reducing the dimensional accuracy of the resulting mold. Moreover, the absorption of water by the 3D printed sacrificial foundry pattern may cause undesirable changes to the polymer network of the pattern, which may further reduce the dimensional accuracy of the resulting mold. Further, some 3D printed sacrificial foundry patterns leave behind significant levels of ash in the mold upon being removed from the mold via burnout. This can cause surface contamination of subsequently cast metal parts, thereby leading to unacceptable deviations in material properties for the cast metal parts.

Three-dimensional articles obtained by 3D printing using the curable compositions described herein are particularly well-suited for use as sacrificial foundry patterns in investment casting operations to produce cast articles, in particular cast metal articles. The curable compositions of the present disclosure can be used in 3D printing applications to produce three-dimensional articles exhibiting high green strength and modulus, as well as low water absorption and low ash content. This makes them suitable for investment casting operations to produce large metal parts. Three-dimensional articles exhibiting these properties can be produced using the curable compositions disclosed herein comprising: a cationically polymerizable component; a sulfonium borate cationic photoinitiator; a radically polymerizable component present in an amount greater than or equal to 40% by weight, based on the total weight of the polymerizable components; and a radical photoinitiator, wherein: the radically polymerizable component comprises a (meth)acrylate-functionalized monomer, or a (meth)acrylate-functionalized oligomer, or both, each having at least two (meth)acrylate functional groups; and wherein the (meth)acrylate-functionalized monomer and the (meth)acrylate-functionalized oligomer are present in a combined amount greater than or equal to 50% by weight, based on the total weight of radically polymerizable component in the curable composition.

Without intending to be limited by theory, the high green strength and modulus of three-dimensional articles formed by the curable compositions described herein are associated with the combination of the high weight percent of the radically polymerizable component, the multifunctional (meth)acrylate content of the radically polymerizable component, and the use of a sulfonium borate cationic photoinitiator. In addition to improving the mechanical properties of 3D printed articles in the green state, the use of a sulfonium borate cationic photoinitiator allows for the substantial elimination of phosphorous-containing and antimony-containing compounds present in many conventional cationic photoinitiators. Without intending to be bound by theory, the curable compositions described herein exhibit low ash content after burnout, which appears to be a result of the elimination or reduction of phosphorous-containing and antimony-containing compounds. The three-dimensional articles produced using the curable compositions described herein are substantially free of phosphorous-containing compounds and antimony-containing compounds while also exhibiting high green strength and modulus without the need for post-curing processes.

This summary provides an overview or framework for understanding the nature and character of the technology described herein. However, this summary is not intended to be an exhaustive list or description of the key or essential features of the claimed subject matter, nor is it intended to be used as an aid in limiting the scope of the claimed subject matter.

Additional features and advantages of the described embodiments are set forth in the detailed description that follows. The additional features and advantages of the described embodiments will be, in part, readily apparent to those skilled in the art from that description or recognized by practicing the described embodiments, including the detailed description that follows as well as the claims.

### DETAILED DESCRIPTION OF THE INVENTION

### Definitions

As used herein, the term "curable composition" refers to a composition that changes properties based on a stimulus and includes compositions having one or both of radically polymerizable components and cationically polymerizable components. Generally, curable compositions of the present disclosure cure through polymerization and/or crosslinking. Generally, those curable compositions cure upon the addition of energy to the system. That energy may come in the form of actinic light, heat, or both. Generally, when compounds in the curable composition contain carbon-carbon double bonds, polymerization (curing) involves reaction of such carbon-carbon double bonds.

As used herein, an "actinically-curable" composition refers to a composition that polymerizes when exposed to actinic radiation, such as ultraviolet light.

As used herein, "polymerizable" refers to a substance, species, compound, moiety or functional group capable of combining by covalent bonding in an addition polymerization. According to certain embodiments, such a polymerizable substance, species, compound, moiety or functional group is capable of being polymerized by a free radical mechanism ("radically polymerizable") or a cationic mechanism ("cationically polymerizable"). According to other embodiments, the polymerizable substance, species, compound moiety or functional group is actinically polymerizable (i.e., capable of being polymerized by exposure to actinic radiation, such as UV or visible light).

As used herein, "cationically polymerizable component" refers to a component capable of polymerizing in the presence of cations or in the presence of acid generators.

As used herein, "radically polymerizable component" refers to a component capable of polymerizing in the presence free radicals.

As used herein, "photoinitiator" refers to a compound that, upon exposure to radiation (e.g., actinic radiation), produces species that initiate the reaction and curing of polymerizable organic substances in a curable composition.

As used herein, "cationic photoinitiator" (also referred to as a photoacid generator) refers to a photoinitiator that, upon exposure to radiation (e.g., actinic radiation), produces reactive cation species. The reactive cation species that are generated then initiate curing (polymerization) of the reactive components of the curable composition.

As used herein, "radical photoinitiator" refers to a photoinitiator that, upon exposure to radiation (e.g., actinic radiation), produces reactive free radical species. The reactive free radical species that are generated then initiate curing (polymerization) of the reactive components of the curable composition.

As used herein, "monomer" refers to a molecule with one or more polymerizable functional groups. The monomer has a single molecular weight, typically below 1000 g/mol, preferably 100 to 950 g/mol. As is generally recognized in the field, commercial products of a particular monomer may contain impurities or other chemical species.

The term "number-average molecular weight" or "Mₙ" refers to the statistical average molecular weight of the polymer chains in a sample or grouping. Number-average molecular weights reported herein are determined using a size exclusion chromatography (SEC) using polymethyl (meth)acrylate reference standards and tetrahydrofuran as the solvent, unless expressly noted otherwise.

As used herein, "oligomer" refers to molecules with a distribution of molecular weights that may or may not have one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol. An oligomer may not always have a single molecular weight.

As used herein, "thermoplastic" refers to a substance (e.g., a polymer) that is a solid at 25° C., softens, melts, or flows when exposed to heat, and re-solidifies when cooled to 25° C.

As used herein, "(meth)acrylate-functionalized monomer" refers to a monomer having at least one (meth)acrylate group.

As used herein, "(meth)acrylate-functionalized oligomer" refers to an oligomer having at least one (meth)acrylate group.

As used herein, "(meth)acrylate group" refers to an acrylate functional group or a methacrylate functional group. An acrylate functional group corresponds to a group of the formula -O-C(=O)-CH=CH₂. A methacrylate group corresponds to a group of the formula -O-C(=O)-C(CH₃)=CH₂.

As used herein, an "epoxide-functionalized compound" refers to a compound, such as a monomer, comprising one or more epoxy groups.

As used herein, an "oxetane-functionalized compound" refers to a compound, such as a monomer, comprising one or more oxetane groups.

As used herein, "stabilizer" refers to a compound or substance which retards or prevents reaction or curing of actinically-curable functional groups present in a composition in the absence of actinic radiation.

As used herein, the term "independently selected or independently replaced," with respect to choices of groups in a structure, means that if there are more than one of the group present in the structure, they need not all be the same, as long as they are selected from the listed choices.

As used herein, "optionally substituted group" means that one or more hydrogen atoms of said group may independently be replaced by a substituent selected from alkyl, cycloalkyl, aryl, heteroaryl, alkoxy, alkylaryl, haloalkyl, hydroxy, halogen, isocyanate, nitrile, amine, oxo (=O), carboxylic acid, -C(=O)-R', -C(=O)-OR', -C(=O)NH-R', -NH-C(=O)R', -O-C(=O)-NH-R', -NH-C(=O)-O-R', -C(=O)-O-C(=O)-R' and -SO₂-NH-R', each R' being independently an optionally substituted group selected from alkyl, aryl and alkylaryl.

As used herein, "alkyl" refers to an optionally substituted monovalent saturated acyclic hydrocarbon group. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like. The term "(C₁-C₄₀) alkyl" means an alkyl having 1 to 40 carbon atoms.

As used herein, "aryl" refers to an optionally substituted monovalent aromatic group. The aryl may contain a single aromatic ring (i.e. phenyl) or more than one ring wherein at least one ring is aromatic. When the aryl comprises more than one more ring, the rings may be fused or linked via a covalent bond (for example biphenyl). Each aromatic ring may optionally comprise one to two additional fused rings (i.e. cycloalkyl, heterocycloalkyl or heteroaryl). Examples of aryls include phenyl, naphthyl, tetrahydronaphthyl, biphenyl, phenanthrenyl, naphthacenyl, fluorenyl, tetrahydrofluorenyl, indacenyl, hexahydroindacenyl, indenyl, dihydroindenyl, anthracenyl and octahydroanthracenyl. The term "(C₆-C₄₀) aryl" means an aryl having 6 to 40 carbon atoms, of which from 6 to 14 of the carbon atoms are aromatic ring carbon atoms.

As used herein, "alkylaryl" refers to an alkyl substituted by an aryl group. An example of an alkylaryl group is benzyl (-CH₂-phenyl).

As used herein, "heteroaryl" refers to an optionally substituted aryl wherein one or more of the ring atoms are independently replaced by a heteroatom selected from O, N or S.

As used herein, "cycloalkyl" refers to an optionally substituted monovalent hydrocarbon group comprising a non-aromatic ring. The cycloalkyl may contain a single non-aromatic ring or more than one non-aromatic ring. When the cycloalkyl comprises more than one more ring, the rings may be fused, bridged or linked via a covalent bond. Examples of cycloalkyl groups include cyclopentyl, cyclohexyl, isobornyl, dicyclopentanyl, tricyclodecane, adamantanyl, any of which may be optionally substituted.

As used herein, "heterocycloalkyl" refers to an optionally substituted cycloalkyl wherein one or more of the ring atoms are independently replaced by a heteroatom selected from O, N or S.

As used herein, an "alkoxylated compound" refers to a compound containing one or more oxyalkylene moieties (e.g., oxyethylene ("ethoxylated") and/or oxypropylene ("propoxylated") moieties). An oxyalkylene moiety corresponds to the general structure -R-O-, wherein R is a divalent aliphatic moiety such as -CH₂CH₂- or CH₂CH(CH₃)-. For example, an alkoxylated compound may contain from 1 to 30 oxyalkylene moieties per molecule.

As used herein, a "multifunctional" (meth)acrylate-functionalized compound means that the compound comprises at least two (meth)acrylate functional groups. For example, a "multifunctional" (meth)acrylate-functionalized monomer refers to a monomer comprising at least two (meth)acrylate functional groups. A multifunctional (meth)acrylate-functionalized oligomer refers to an oligomer comprising at least two (meth)acrylate functional groups.

As used herein, the "total weight of the polymerizable components" refers to the sum of the total weight of the radically polymerizable component in the curable composition and the total weight cationically polymerizable component in the curable composition.

The curable compositions of the present disclosure comprise a cationically polymerizable component, a sulfonium borate cationic photoinitiator, a radically polymerizable component, and a radical photoinitiator. The radically polymerizable component is present in the curable composition in an amount greater than or equal to 40% by weight, based on the total weight of the polymerizable components. The radically polymerizable component comprises a (meth)acrylate-functionalized monomer, a (meth)acrylate-functionalized oligomer, or both, each having at least two (meth)acrylate functional groups. The multifunctional (meth)acrylate-functionalized monomer and the multifunctional (meth)acrylate-functionalized oligomer are present in a combined amount greater than or equal to 50% by weight, based on the total weight of radically polymerizable component in the curable composition.

### Cationically Polymerizable Component

The curable compositions of the present disclosure comprise a cationically polymerizable component. The cationically polymerizable component may include monomers, oligomers, and/or polymers, and may contain aliphatic, aromatic, cycloaliphatic, arylaliphatic, and heterocyclic moiety(ies), and combinations thereof. Suitable cationically polymerizable components may be selected from cyclic ether compounds such as epoxide-functionalized compounds, oxetane-functionalized compounds, cyclic lactone compounds, cyclic acetal compounds, cyclic thioether compounds, spiro orthoester compounds, vinylether compounds, vinyl amide compounds, oxolane compounds, thiirane compounds, thiethanes compounds, polyols, derivatives thereof, and combinations thereof.

In embodiments, the cationically polymerizable component comprises an epoxide-functionalized compound, an oxetane-functionalized compound, or both.

In embodiments, the epoxide-functionalized compound is selected from the group consisting of 3,4-epoxycyclohexylmethyl 3',4'-epoxycyclohexanecarboxylate, bis[(3,4-epoxycyclohexyl)methyl]adipate, bisphenol A diglycidyl ether, hydrogenated bisphenol A diglycidyl ether, 1,4-butanediol diglycidyl ether, trimethylolpropane triglycidyl ether, dicyclopentadiene diepoxide, 3,4-epoxycyclohexyl methyl methacrylate, tetrahydrophthalic acid diglycidyl ester, hexahydrophthalic acid diglycidyl ester, 4,5-epoxytetrahydrophthalic acid diglycidyl ester, pentaerythritol tetraglycidyl ether, vinylcyclohexane dioxide, and combinations thereof.

In embodiments, the oxetane-functionalized compound is selected from the group consisting of 3-ethyloxetane-3-methanol, 3-ethyl-3-[(2-ethylhexyloxy)methyl]oxetane, 3-ethyl-3-[(phenylmethoxy)methyl]-oxetane, 1,4-bis[(3-ethyl-3-oxetanylmethoxy)methyl]benzene, 4,4-bis(3-ethyl-3-oxetanyl)methoxymethyl]biphenyl, 3-ethyl-3-(methacryloyloxy)methyloxetane, 3-ethyl-3[[(3-ethyloxetane-3-yl)methoxy]methyl]oxetane, and combinations thereof.

Additional suitable cationically polymerizable components include bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol F diglycidyl ether, hydrogenated bisphenol S diglycidyl ether, 2-(3,4-epoxycyclohexyl-5,5-spiro-3,4-epoxy)-cyclohexane-1,4-dioxane, vinylcyclohexene oxide, 4-vinylepoxycyclohexane, limonene oxide, limonene dioxide, bis(3,4-epoxy-6-methylcyclohexylmethyl)adipate, 3,4-epoxy-6-methylcyclohexyl-3',4'-epoxy-6'-methylcyclohexanecarboxylate, ε-caprolactone-modified 3,4-epoxycyclohexylmethyl-3',4'-epoxycyclohexane carboxylates, trimethylcaprolactone-modified 3,4-epoxycyclohexylmethyl-3',4'-epoxycyclohexane carboxylates, β-methyl-δ-valerolactone-modified 3,4-epoxycyclohexcylmethyl-3',4'-epoxycyclohexane carboxylates, methylenebis(3,4-epoxycyclohexane), bicyclohexyl-3,3'-epoxide, bis(3,4-epoxycyclohexyl) with a linkage of-O-, -S-, -SO-, -SO₂-, -C(CH₃)₂-, -CBr₂-, - C(CBr₃)₂-, -C(CF₃)₂-, -C(CCl₃)₂-, or -CH(C₆H₅)-, di(3,4-epoxycyclohexylmethyl) ether of ethylene glycol, ethylenebis(3,4-epoxycyclohexanecarboxylate), epoxyhexahydrodioctylphthalate, epoxyhexahydro-di-2-ethylhexyl phthalate, 1,6-hexanediol diglycidyl ether, neopentylglycol diglycidyl ether, glycerol triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidated soybean oil, epoxybutylstearic acid, epoxyoctylstearic acid, epoxidated linseed oil, epoxidated polybutadiene, 3-ethyl-3-hydroxymethyloxetane, 3-ethyl-3-(3-hydroxypropyl)oxymethyloxetane, 3-ethyl-3-(4-hydroxybutyl)oxymethyloxetane, 3-ethyl-3-(5-hydroxypentyl)oxymethyloxetane, 3-ethyl-3-phenoxymethyloxetane, bis[(1-ethyl(3-oxetanyl))methyl]ether, 3-ethyl-((triethoxysilylpropoxymethyl)oxetane, 3-(meth)-allyloxymethyl-3-ethyloxetane, (3-ethyl-3-oxetanylmethoxy)methylbenzene, 4-fluoro-[1-(3-ethyl-3-oxetanylmethoxy)methyl]benzene, 4-methoxy-[1-(3-ethyl-3-oxetanylmethoxy)methyl]-benzene, [1-(3-ethyl-3-oxetanylmethoxy)ethyl]phenyl ether, isobutoxymethyl(3-ethyl-3-oxetanylmethyl)ether, 2-ethylhexyl(3-ethyl-3-oxetanylmethyl)ether, ethyldiethylene glycol(3-ethyl-3-oxetanylmethyl)ether, dicyclopentadiene (3-ethyl-3-oxetanylmethyl)ether, dicyclopentenyloxyethyl(3-ethyl-3-oxetanylmethyl)ether, dicyclopentenyl(3-ethyl-3-oxetanylmethyl)ether, tetrahydrofurfuyl(3-ethyl-3-oxetanylmethyl)ether, 2-hydroxyethyl(3-ethyl-3-oxetanylmethyl)ether, 2-hydroxypropyl(3-ethyl-3-oxetanylmethyl)ether, and combinations thereof. Examples of polyfunctional materials that are cationically polymerizable include dendritic polymers such as dendrimers, linear dendritic polymers, dendrigraft polymers, hyperbranched polymers, star branched polymers, and hypergraft polymers with epoxy or oxetane functional groups. The dendritic polymers may contain one type of polymerizable functional group or different types of polymerizable functional groups, for example, epoxy and oxetane functions.

In embodiments, the curable composition comprises the cationically polymerizable component in an amount from 1% to 60% by weight, from 5% to 60% by weight, from 10% to 60% by weight, from 15% to 60% by weight, from 20% to 60% by weight, from 25% to 60% by weight, from 30% to 60% by weight, from 35% to 60% by weight, from 40% to 60% by weight, from 1% to 55% by weight, from 1% to 50% by weight, from 1% to 45% by weight, from 1% to 40% by weight, from 1% to 35% by weight, from 1% to 30% by weight, from 1% to 25% by weight, from 5% to 55% by weight, from 10% to 55% by weight, from 15% to 55% by weight, from 20% to 55% by weight, from 25% to 55% by weight, from 25% to 50% by weight, from 30% to 50% by weight, or any subset thereof, based on the total weight of the polymerizable components.

In embodiments, the curable composition is substantially free of thermoplastics. Existing curable compositions have relied on the inclusion of thermoplastics to achieve desirable mechanical properties for additively manufactured articles prepared with said curable compositions. The present inventors have found that curable compositions disclosed herein do not require the presence of thermoplastics to maintain adequate mechanical properties for the green state articles (e.g., green strength >= 40 MPa and green modulus >= 800 MPa). Without intending to be bound by theory, the absence of thermoplastics in the curable composition is believed to be beneficial for avoiding an undesirable increase in viscosity of the curable composition, e.g., such that manufacturing difficulties may arise, which may be caused by the inclusion of thermoplastics.

### Sulfonium Borate Cationic Photoinitiator

The curable compositions of the present disclosure comprise a sulfonium borate cationic photoinitiator. When utilized in curable compositions containing a high weight percent of radically polymerizable component (e.g., greater than or equal to 40% by weight, based on the total weight of the polymerizable components) and a high multifunctional (meth)acrylate content (e.g., greater than or equal to 50% by weight, based on the total weight of radically polymerizable component in the curable composition), the sulfonium borate cationic photoinitiator provides high green strength and modulus while avoiding the need for phosphorous-containing and antimony-containing compounds in the curable composition. In embodiments, the curable compositions of the present disclosure are substantially free of both phosphorous-containing compounds and antimony-containing compounds. Moreover, using an iodonium borate cationic photoinitiator as the primary cationic photoinitiator, in combination with the high weight percent of radically polymerizable component and the high multifunctional (meth)acrylate content, may result in unstable curable compositions. Such unstable curable compositions tend to exhibit viscosity increases that may lead to gelation and/or acid leaking. Moreover, such unstable curable compositions may change the curing kinetics such that the curable compositions do not remain in their uncured, original state for a practical length of time. Additionally, such unstable curable compositions may have undesirable effects on the properties of the cured part such as green strength, green modulus, elongation, color, and surface quality.

In embodiments, the curable composition is substantially free of phosphorous-containing compounds, antimony-containing compounds, and/or thermoplastics and thus contains less than 2 wt%, such as less than 1 wt%, such as less than 0.5 wt%, such as less than 0.2 wt% such as 0 to 2 wt%, such as 0 to 1 wt%, such as 0 to 0.5 wt%, such as 0 wt%, of phosphorous-containing compounds, antimony-containing compounds, and/or thermoplastics, relative to the total weight of the polymerizable components.

In embodiments, the sulfonium borate cationic photoinitiator comprises an arylsulfonium cation, e.g., a monoarylsulfonium cation, a diarylsulfonium cation, a triarylsulfonium cation, or combinations thereof. Exemplary arylsulfonium cations include triphenylsulfonium cations, methyldiphenylsulfonium cations, dimethylphenylsulfonium cations, diphenylnaphthylsulfonium cations, and di(methoxy-naphthyl)methylsulfonium cations.

In embodiments, the sulfonium borate cationic photoinitiator comprises an R-substituted aromatic thioether triarylsulfonium cation of structure (I). 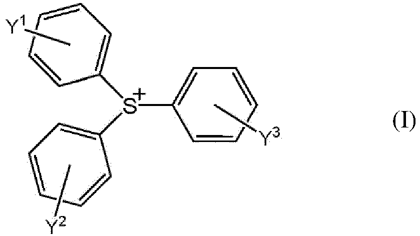 wherein Y¹, Y², and Y³ are the same or different, and wherein Y¹, Y², or Y³ are R-substituted aromatic thioether with R being an acetyl or aryl group.

In embodiments, the sulfonium borate cationic photoinitiator comprises a tetrafluoroborate anion, a tetrakis(pentafluorophenyl)borate anion, or combinations thereof.

In embodiments, the sulfonium borate cationic photoinitiator is selected from the group consisting of tris(4-(4-acetylphenyl)thiophenyl)sulfonium tetrakis(pentafluorophenyl)borate, diphenyl[4-(phenylthio)phenyl] sulfonium tetrakis(pentafluorophenyl)borate, (4- { [4-(diphenylsulfanylium)phenyl] sulfanyl }phenyl)diphenylsulfonium bis[tetrakis(pentafluorophenyl)borate], (thiodi-4,1-phenylene)bis[bis(4-methylphenyl)]sulfonium bis[tetrakis(pentafluorophenyl)borate], triphenylsulfonium tetrafluoroborate, dimethylphenacylsulfonium tetrafluoroborate, and derivatives (including mono salts and bis salts) and combinations thereof.

In embodiments, the sulfonium borate cationic photoinitiator is present in the curable composition in an amount from 0.01% to 10% by weight, from 0.01% to 9% by weight, from 0.01% to 8% by weight, from 0.01% to 7% by weight, from 0.01% to 6% by weight, from 0.01% to 5% by weight, from 0.01% to 4% by weight, from 0.01% to 3% by weight, from 0.01% to 2% by weight, from 0.01% to 1% by weight, from 0.01% to 0.5% by weight, from 0.05% to 0.5% by weight, from 0.1% to 0.5% by weight, or any subset thereof, based on the total weight of cationically polymerizable component in the curable composition.

### Radically Polymerizable Component

The curable compositions of the present disclosure comprise a radically polymerizable component present in an amount greater than or equal to 40% by weight, based on the total weight of the polymerizable components. In embodiments, the curable composition comprises the radically polymerizable component in an amount greater than 40% by weight, greater than or equal to 40.5% by weight, greater than or equal to 41% by weight, greater than or equal to 41.5% by weight, greater than or equal to 42% by weight, greater than or equal to 42.5% by weight, greater than or equal to 43% by weight, greater than or equal to 43.5% by weight, greater than or equal to 44% by weight, greater than or equal to 44.5% by weight, greater than or equal to 45% by weight, greater than or equal to 45.5% by weight, greater than or equal to 46% by weight, greater than or equal to 46.5% by weight, greater than or equal to 47% by weight, greater than or equal to 47.5% by weight, greater than or equal to 48% by weight, greater than or equal to 48.5% by weight, greater than or equal to 49% by weight, greater than or equal to 49.5% by weight, greater than or equal to 50% by weight, greater than 50% by weight, greater than or equal to 50.5% by weight, greater than or equal to 51% by weight, greater than or equal to 51.5% by weight, greater than or equal to 52% by weight, greater than or equal to 52.5% by weight, greater than or equal to 53% by weight, greater than or equal to 53.5% by weight, greater than or equal to 54% by weight, greater than or equal to 54.5% by weight, greater than or equal to 54% by weight, greater than or equal to 54.5% by weight, greater than or equal to 56% by weight, greater than or equal to 56.5% by weight, greater than or equal to 57% by weight, greater than or equal to 57.5% by weight, greater than or equal to 58% by weight, 58.5% by weight, greater than or equal to 59% by weight, greater than or equal to 59.5% by weight, or greater than or equal to 60% by weight, based on the total weight of the polymerizable components.

In embodiments, the curable composition comprises the radically polymerizable component in an amount from 40% to 99% by weight, from 40.5% to 99% by weight, from 41% to 99% by weight, from 41.5% to 99% by weight, from 42% to 99% by weight, from 42.5% to 99% by weight, from 43% to 99% by weight, from 43.5% to 99% by weight, from 44% to 99% by weight, from 44.5% to 99% by weight, from 45% to 99% by weight, from 45.5% to 99% by weight, from 46% to 99% by weight, from 46.5% to 99% by weight, from 47% to 99% by weight, from 47.5% to 99% by weight, from 48% to 99% by weight, from 48.5% to 99% by weight, from 49% to 99% by weight, from 49.5% to 99% by weight, from 50% to 99% by weight, from 50.5% to 99% by weight, from 51% to 99% by weight, from 51.5% to 99% by weight, from 52% to 99% by weight, from 52.5% to 99% by weight, from 53% to 99% by weight, from 53.5% to 99% by weight, from 54% to 99% by weight, from 54.5% to 99% by weight, from 55% to 99% by weight, from 55.5% to 99% by weight, from 56% to 99% by weight, from 56.5% to 99% by weight, from 57% to 99% by weight, from 57.5% to 99% by weight, from 58% to 99% by weight, from 58.5% to 99% by weight, from 59% to 99% by weight, from 59.5% to 99% by weight, from 60% to 99% by weight, or any subset thereof, based on the total weight of the polymerizable components.

The radically polymerizable component comprises a (meth)acrylate-functionalized monomer, a (meth)acrylate-functionalized oligomer, or both, each having at least two (meth)acrylate functional groups. The (meth)acrylate-functionalized monomer, the (meth)acrylate-functionalized oligomer, or both having at least two (meth)acrylate functional groups may also be referred to herein as the multifunctional (meth)acrylate portion of the radically polymerizable component and may be present in a combined amount from 50% to 100% by weight, from 55% to 100% by weight, from 60% to 100% by weight, from 65% to 100% by weight, from 70% to 100% by weight, from 75% to 100% by weight, from 80% to 100% by weight, from 85% to 100% by weight, from 90% to 100% by weight, from 95% to 100% by weight, from 50% to 95% by weight, from 55% to 95% by weight, from 55% to 90% by weight, from 60% to 90% by weight, from 60% to 85% by weight, from 65% to 85% by weight, from 70% to 85% by weight, from 70% to 80% by weight, from 75% to 80% by weight, or any subset thereof, based on the total weight of radically polymerizable component in the curable composition. It should be understood that in embodiments wherein the radically polymerizable component comprises less than 100% by weight of the multifunctional (meth)acrylate portion, the remaining portion of the radically polymerizable component may comprise (meth)acrylate-functionalized monomers, (meth)acrylate-functionalized oligomers, or both, each having a single (meth)acrylate functional group.

Suitable (meth)acrylate-functionalized monomers having two (meth)acrylate functional groups per molecule (also referred to herein as di(meth)acrylate-functionalized monomers) may be selected from the group consisting of tricyclodecane dimethanol diacrylate, alkanediol di(meth)acrylates, alkenediol di(meth)acrylates, polyethylene di(meth)acrylates (e.g., polyethylene glycol di(meth)acrylates; any molecular weight), dipropylene glycol di(meth)acrylate, tripropylene glycol di(meth)acrylate, neopentyl glycol di(meth)acrylates (e.g., neopentyl glycol hydroxypivalate di(meth)acrylate), alkoxylated (e.g., ethoxylated and/or propoxylated) derivatives thereof, and combinations thereof. Suitable alkanediol di(meth)acrylates include, but are not limited to, pentanediol di(meth)acrylate, hexanediol di(meth)acrylate, octanediol di(meth)acrylate, and decanediol di(meth)acrylate. Suitable alkenediol di(meth)acrylates include, but are not limited to, bisphenol A di(meth)acrylate. Cyclohexane dimethanol di(meth)acrylate may also be used as the di(meth)acrylate-functionalized monomer in the curable compositions of the present disclosure.

In embodiments, the (meth)acrylate-functionalized monomer, the (meth)acrylate-functionalized oligomer, or both having at least two (meth)acrylate functional groups (i.e., the multifunctional (meth)acrylate portion of the radically polymerizable component) have at least three (meth)acrylate functional groups. Suitable (meth)acrylate-functionalized monomers having three (meth)acrylate functional groups per molecule (also referred to herein as tri(meth)acrylate-functionalized monomers) may be selected from the group consisting of trimethylolpropane tri(meth)acrylate, pentaerythritol tri(meth)acrylate, glyceryl tri(meth)acrylate, alkoxylated derivatives thereof, and combinations thereof. Tris(2-hydroxyethyl)isocyanurate tri(meth)acrylate may also be used as a tri(meth)acrylate-functionalized monomer in the curable compositions of the present disclosure.

In embodiments, the (meth)acrylate-functionalized monomer, the (meth)acrylate-functionalized oligomer, or both having at least two (meth)acrylate functional groups (i.e., the multifunctional (meth)acrylate portion of the radically polymerizable component) have at least four (meth)acrylate functional groups. Suitable (meth)acrylate-functionalized monomers having at least four (meth)acrylate functional groups per molecule may be selected from the group consisting of di(trimethylolpropane) tetra(meth)acrylate, pentaerythritol tetra(meth)acrylate, dipentaerythritol penta(meth)acrylate, alkoxylated derivatives thereof, and combinations thereof.

Moreover, the (meth)acrylate-functionalized monomer may comprise a mixture of (meth)acrylate-functionalized monomers having different functionalities. Similarly, the (meth)acrylate-functionalized oligomer may comprise a mixture of (meth)acrylate-functionalized oligomers having different functionalities. For example, the (meth)acrylate-functionalized monomer may comprise a combination of di(meth)acrylate-functionalized monomers, tri(meth)acrylate functionalized monomers, tetra(meth)acrylate-functionalized monomers, and (meth)acrylate functionalized monomers containing more than four (meth)acrylate functional groups. In embodiments, the (meth)acrylate-functionalized monomer may comprise equal amounts of di(meth)acrylate-functionalized monomers and tetra(meth)acrylate-functionalized monomers. Without intending to be bound by theory, it is believed that such combinations of di(meth)acrylate-functionalized monomers, tri(meth)acrylate-functionalized monomers, tetra(meth)acrylate-functionalized monomers, and higher functional (meth)acrylate-functionalized monomers may be beneficial for producing three-dimensional articles exhibiting high green strength, high green modulus, and low water absorption. Similarly, without intending to be bound by theory, it is believed that combinations of di(meth)acrylate-functionalized oligomers, tri(meth)acrylate-functionalized oligomers, tetra(meth)acrylate-functionalized oligomers, and higher functional (meth)acrylate-functionalized oligomers may be beneficial for producing three-dimensional articles exhibiting high green strength, high green modulus, and low water absorption.

One of ordinary skill in the art would know that there are polymerizable components that, if used in a curable composition in certain quantities, will degrade mechanical properties such as green strength and green modulus of three-dimensional articles produced from curable compositions. For example, multifunctional (meth)acrylate-functionalized monomers known to have a low glass transition temperature and/or modulus may be unsuitable in curable compositions where high green strength and green modulus is desired. As such, in embodiments, the curable composition does not include substantial amounts of a polymerizable component having a glass transition temperature below ambient temperature (25°C). Other embodiments will have no substantial amount of polymerizable component having a glass transition temperature below -35°C.

### Radical Photoinitiator

The radical photoinitiator is operable to cure the radically polymerizable component. Generally, radical photoinitiators can adopt two different modes of action, and are classified by mode of action as Norrish Type I and Norrish Type II photo-initiators. In some embodiments, the radical photoinitiator comprises a Norrish Type I photo-initiator, a Norrish Type II photo-initiator, or both.

As used herein, the term "activity" with reference to Norrish Type I and Norrish Type II activity is intended to relate to Norrish photoinitiation and analogous reactions. For instance, a photoinitiator having Norrish Type I activity would be a photoinitiator characterized by a cleavage reaction into radical fragments of the original photoinitiator on exposure to UV light. For an initiator having Norrish Type II activity, exposure to UV light causes the formation of an excited species that can abstract a hydrogen to create a second radical species that can initiate a photo polymerization. The Norrish Type I and Norrish Type II mechanisms are known to the person of ordinary skill in the art. Radical photoinitiators suitable for use in the curable compositions of the present disclosure include, but are not limited to, benzoins, benzoin ethers, acetophenones, α-hydroxy acetophenones, benzyl, benzyl ketals, anthraquinones, α-hydroxyketones, phenylglyoxylates, α-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and combinations thereof.

Examples of suitable radical photoinitiators include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, α-hydroxy keto, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric α-hydroxy ketone, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, 4'-ethoxyacetophenone, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, 9,10-diethoxy and 9,10-dibutoxyanthracene, 2-ethyl-9,10-dimethoxyanthracene, thioxanthen-9-one and combinations thereof.

An acetophenone radical photoinitiator suitable for the use in the curable compositions described herein is available from Sartomer Americas under the trademark Speedcure^{™} BKL (2,2-dimethoxy-2-phenylacetophenone). Some commercially available benzophenone radical photoinitiators suitable for the use in the curable compositions described herein include SpeedCure^{™} BP (benzophenone), SpeedCure^{™} 7005 (polymeric benzophenone), SpeedCure^{™} 7006 (polymeric benzophenone), SpeedCure^{™} EMK (4,4'bis(diethylamino)benzophenone) and SpeedCure^{™} BMS (4-benzoyl-4'-methyldiphenyl sulphide). Some commercially available thioxanthone radical photoinitiators suitable for the use in the curable compositions described herein include Speedcure^{™} 7010 (polymeric thioxanthone), Speedcure^{™} ITX (isopropyl thioxanthone), and SpeedCure^{™} DETX (2,4-diethylthioxanthone), SpeedCure^{™} CPTX (1-chloro-4-propoxythioxanthone). The exemplary radical photoinitiators provided herein may be used individually or in any combination.

In embodiments, the radical photoinitiator comprises an acetophenone, a benzophenone, or both. In embodiments, the radical photoinitiator is selected from the group consisting of 2,2-dimethoxy-2-phenylacetophenone, 2-hydroxy-2-methyl-1-phenyl-propanone, 1-hydroxycyclohexyl phenyl ketone, 1-[4-(2-hydroxyethoxy)-phenyl]-2-hydroxy-2-methyl-1 -propane-1 -one, oligo[2-hydroxy-2-methyl-1-[4-(1-methylvinyl)phenyl]propanone], 2-methylbenzophenone, 4-methylbenzophenone, methyl-2-benzoylbenzoate, 4-phenylbenzophenone, 4-benzoyl-4'-methyldiphenyl sulphide, and combinations thereof.

In embodiments, the radical photoinitiator is present in the curable composition in an amount from 0.01% to 10% by weight, from 0.05% to 10% by weight, from 0.1% to 10% by weight, from 0.5% to 8% by weight, from 0.5% to 6% by weight, from 1% to 6% by weight, from 1% to 5% by weight, from 2% to 5% by weight, from 2.5% to 5% by weight, from 3% to 5% by weight, from 3% to 4.5% by weight, from 3.5% to 4.5% by weight, from 3.5% to 4% by weight, or any subset thereof, based on the total weight of radically polymerizable component in the curable composition.

### Optional Additives

In embodiments, the curable composition of the present disclosure comprises at least one stabilizer. Stabilizers may be introduced in the curable composition in order to provide adequate storage stability and shelf life. Advantageously, one or more such stabilizers are present at each stage of the method used to prepare the curable composition, to protect against unwanted reactions during processing of the curable composition. The amount and type of stabilizer may be selected such that the composition remains capable of being cured when exposed to actinic radiation (that is, the stabilizer does not prevent radiation curing of the composition). Typically, effective stabilizers for purposes of the present disclosure will be classified as free radical stabilizers (i.e., stabilizers which function by inhibiting free radical reactions) or acid scavengers.

Any of the free radical stabilizers or acid scavengers known in the art may be utilized in the curable compositions of the present disclosure. Quinones represent a particularly preferred type of stabilizer which can be employed in the context of the present invention. As used herein, the term "quinone" includes both quinones and hydroquinones as well as ethers thereof such as monoalkyl, monoaryl, monoaralkyl and bis(hydroxyalkyl) ethers of hydroquinones. Hydroquinone monomethyl ether is an example of a suitable stabilizer which can be utilized. Other stabilizers known in the art such as BHT and derivatives, phenothiazine (PTZ), and tin(II) salts can also be used.

The concentration of stabilizer(s) in the curable composition will vary depending upon the particular stabilizer or combination of stabilizers selected for use and also on the degree of stabilization desired and the susceptibility of components in the curable compositions towards degradation in the absence of stabilizer. In embodiments, the total amount of free radical stabilizer in the curable composition is from 0.01 to 1% by weight, based on the total weight of radically polymerizable component in the curable composition. In embodiments, the total amount of acid scavengers in the curable composition is from 0.01 to 1% by weight, based on the total weight of cationically polymerizable component in the curable composition

In embodiments, the curable composition of the present disclosure comprises a light blocker (sometimes referred to as a light absorber). The introduction of a light blocker is particularly advantageous when the curable composition is to be used as a resin in a three-dimensional printing process involving photocuring of the curable composition. The light blocker may be any such substances known in the three-dimensional printing art, including for example non-reactive pigments and dyes. The light blocker may be a visible light blocker or a UV light blocker, for example. Examples of suitable light blockers include, but are not limited to, titanium dioxide, carbon black, and organic ultraviolet light absorbers such as hydroxybenzophenone, hydroxyphenylbenzotriazole, oxanilide, hydroxyphenyltriazine, Sudan I, bromothymol blue, 2,2'-(2,5-thiophenediyl)bis(5-tert-butylbenzoxazole) (available from Sartomer Americas under the trademark Speedcure^{™} OB-184) and benzotriazole ultraviolet light absorbers.

The amount of light blocker may be varied as desired or appropriate for particular applications. Generally speaking, if the curable composition contains a light blocker, it is present in a concentration of from 0.001 to 10 % by weight, based on the total weight of the curable composition.

### Three-Dimensional Articles Made From Curable Compositions

The curable compositions described herein can be used as resins in three-dimensional printing applications. Three-dimensional (3D) printing (also referred to as additive manufacturing) is a process in which a 3D digital model is manufactured by the accretion of construction material. The 3D printed object is created by utilizing the computer-aided design (CAD) data of an object through sequential construction of two dimensional (2D) layers or slices that correspond to cross-sections of 3D objects. Stereolithography (SL) is one type of additive manufacturing where a liquid resin is hardened by selective exposure to a radiation to form each 2D layer. The radiation can be in the form of electromagnetic waves or an electron beam. The most commonly applied energy source is ultraviolet, visible or infrared radiation.

Suitable 3D printing processes may include digital light printing (DLP), stereolithography (SLA), inkjet, multi-jet printing, piezoelectric printing, actinically-cured extrusion, liquid crystal display (LCD) printing, and gel deposition printing, and hybrids of any of these.

Stereolithography and other actinically-curable 3D printing methods typically apply low intensity light sources to radiate each layer of a curable composition to form the desired article comprising the green composition. As a result, curable composition polymerization kinetics, the green strength, and homopolymer volumetric shrinkage upon cure of the curable composition article are important criteria to determine if a particular curable composition will sufficiently polymerize (cure) when irradiated and have sufficient print fidelity for its intended purpose.

The above-mentioned desired article comprising the green composition may then be exposed to an additional dose of actinic radiation in a process known as post-curing. Post-curing the article comprising the green composition may produce an article that comprises the post-cured composition. However, as discussed above, in embodiments, a post-curing step is not performed or needed to achieve green properties sufficient for use in an investment casting process to produce large metal parts.

The curable compositions of the present disclosure are especially useful as 3D printing resin formulations, that is, compositions intended for use in manufacturing three-dimensional articles using 3D printing techniques. Such three-dimensional articles may be free-standing/self-supporting and may comprise, consist essentially of, or consist of a composition in accordance with the present disclosure, whether that curable composition has been cured or not. The three-dimensional article may also be a composite, comprising at least one component consisting essentially of, or consisting of, a cured composition as previously mentioned as well as at least one additional component comprised of one or more materials other than such a cured composition. However, as mentioned above, embodiments of the curable compositions described herein are substantially free of thermoplastics. The curable compositions of the present disclosure may be used in a three-dimensional printing operation together with another material which functions as a scaffold or support for the article formed from the curable compositions of the present disclosure.

Thus, the curable compositions of the present disclosure are useful in the practice of various types of three-dimensional fabrication or printing techniques, including methods in which construction of a three-dimensional object is performed in a step-wise or layer-by-layer manner. In such methods, layer formation may be performed by solidification (curing) of the curable composition under the action of exposure to radiation, such as visible, UV or other actinic irradiation. For example, new layers may be formed at the top surface of the growing object or at the bottom surface of the growing object. The curable compositions of the present disclosure may also be advantageously employed in methods for the production of three-dimensional objects by additive manufacturing wherein the method is carried out continuously. For example, the object may be produced from a liquid interface. Suitable methods of this type are sometimes referred to in the art as "continuous liquid interface (or interphase) product (or printing)" ("CLIP") methods. Such methods are described, for example, in WO 2014/126830, WO 2014/126834, WO 2014/126837, and Tumbleston et al., "Continuous Liquid Interface Production of 3D Objects," Science Vol. 347, Issue 6228, pp. 1349-1352 (March 20, 2015), the entire disclosure of which are incorporated herein by reference in their entirety for all purposes.

When stereolithography is conducted above an oxygen-permeable build window, the production of an article using a curable composition in accordance with the present disclosure may be enabled in a CLIP procedure by creating an oxygen-containing "dead zone" which is a thin uncured layer of the curable composition between the window and the surface of the cured article as it is being produced. In such a process, a curable composition is used in which curing (polymerization) is inhibited by the presence of molecular oxygen; such inhibition is typically observed, for example, in curable compositions which are capable of being cured by free radical mechanisms. The desired dead zone thickness may be maintained by selecting various control parameters such as photon flux and the optical and curing properties of the curable composition. The CLIP process proceeds by projecting a continuous sequence of actinic radiation (e.g., UV) images (which may be generated by a digital light-processing imaging unit, for example) through an oxygen-permeable, actinic radiation- (e.g., UV-) transparent window below a bath of the curable composition maintained in liquid form. A liquid interface below the advancing (growing) article is maintained by the dead zone created above the window. The curing article is continuously drawn out of the curable composition bath above the dead zone, which may be replenished by feeding into the bath additional quantities of the curable composition to compensate for the amounts of curable composition being cured and incorporated into the growing article.

In another embodiment, the curable composition may be supplied by ejecting it from a print head rather than supplying it from a vat. This type of process is commonly referred to as inkjet or multi jet 3D printing. One or more UV curing sources mounted just behind the inkjet print head cures the curable composition immediately after it is applied to the build surface substrate or to previously applied layers. Two or more print heads can be used in the process which allows application of different compositions to different areas of each layer. For example, compositions of different colors or different physical properties can be simultaneously applied to create 3D printed parts of varying composition. In a common usage, support materials - which are later removed during post-processing - are deposited at the same time as the compositions used to create the desired 3D printed part. The printheads can operate at temperatures from about 25°C up to about 100°C. Viscosities of the curable compositions are less than 30 mPa·s at the operating temperature of the printhead.

A method of printing a three-dimensional article comprises:
a) providing a first layer of the curable composition onto a surface;
b) curing the first layer, at least partially, to provide a cured first layer;
c) providing a second layer of the curable composition onto the first cured layer;
d) curing the second layer, at least partially, to provide a cured second layer adhered to the cured first layer;
e) repeating steps c) and d) a desired number of times to build up the three-dimensional article.

A method of printing a three-dimensional article comprises:
a) providing (e.g., coating) a first layer of the curable composition according to the invention in liquid form onto a surface;
b) exposing the first layer image-wise to actinic radiation to form a first exposed imaged cross-section, wherein the actinic radiation is of sufficient intensity and duration to cause at least partial curing of the layer in the exposed areas;
c) providing (e.g., coating) an additional layer of the curable composition according to the invention onto the previously exposed imaged cross-section;
d) exposing the additional layer image-wise to actinic radiation to form an additional imaged cross-section, wherein the actinic radiation is of sufficient intensity and duration to cause at least partial curing of the additional layer in the exposed areas and to cause adhesion of the additional layer to the previously exposed imaged cross-section;
e) repeating steps c) and d) a desired number of times to build up the three-dimensional article.

Either of the two methods above may further comprise step f) exposing the three-dimensional article to actinic radiation, wherein the actinic radiation is of sufficient intensity and duration such that at least 50%, at least 60%, at least 70%, at least 80%, at least 90%, at least 95% by weight, or even at least 99% of the functional groups of the curable composition that were present in the curable composition prior to any curing is cured. The entirety of, or portions of, the three-dimensional article may be exposed to the actinic radiation.

Although the curing steps may be carried out by any suitable means, which will in some cases be dependent upon the components present in the curable composition, in certain embodiments of the disclosure the curing is accomplished by exposing the layer to be cured to an effective amount of radiation, in particular actinic radiation. Actinic radiation may include, for example, electron beam radiation, UV radiation, and visible light radiation. The three-dimensional article which is formed may be heated to effect thermal curing.

After the three-dimensional article has been printed, it may be subjected to one or more post-processing steps. The post-processing steps can be selected from one or more of the following steps: removal of any printed support structures; removal of residual resin by, for example, washing the part with water and/or organic solvents, centrifuging the part, and/or vacuum drying the part; and post-curing using thermal treatment and/or actinic radiation either simultaneously or sequentially. The post-processing steps may be used to transform the freshly printed article into a finished, functional article ready to be used in its intended application.

In some embodiments of the one or more post-processing steps, curing may be accelerated or facilitated by supplying energy to the curable composition, such as by heating the curable composition. A curable composition may be cured by exposure to actinic radiation, with further curing being achieved by heating the partially cured article. For example, an article formed from the curable composition (e.g., a three-dimensional article) may be heated at a temperature of from 40°C to 250°C for a period of time from 5 minutes to 12 hours.

A three-dimensional article may comprise the curable composition of the present disclosure. Upon curing, the three-dimensional article may comprise the cured composition of the present disclosure. It should be understood that some portions of the three-dimensional article may comprise the curable composition while other portions of the same article may comprise the cured composition.

In embodiments, the three-dimensional articles produced using the curable compositions of the present disclosure and in accordance with the methods described herein have a green strength measured in accordance with ASTM D882-18 of greater than or equal to 40 MPa, greater than or equal to 41 MPa, greater than or equal to 42 MPa, greater than or equal to 43 MPa, greater than or equal to 44 MPa, greater than or equal to 45 MPa, greater than or equal to 46 MPa, greater than or equal to 47 MPa, greater than or equal to 48 MPa, greater than or equal to 49 MPa, greater than or equal to 50 MPa, greater than or equal to 51 MPa, greater than or equal to 52 MPa, or greater than or equal to 53 MPa.

In embodiments, the three-dimensional articles produced using the curable compositions of the present disclosure and in accordance with the methods described herein have a green modulus measured in accordance with ASTM D882-18 of greater than or equal to 800 MPa, greater than or equal to 850 MPa, greater than or equal to 900 MPa, greater than or equal to 950 MPa, greater than or equal to 1000 MPa, greater than or equal to 1050 MPa, greater than or equal to 1100 MPa, greater than or equal to 1150 MPa, greater than or equal to 1200 MPa, greater than or equal to 1250 MPa, greater than or equal to 1300 MPa, greater than or equal to 1350 MPa, greater than or equal to 1400 MPa, greater than or equal to 1450 MPa, greater than or equal to 1500 MPa, or greater than or equal to 1550 MPa.

In embodiments, the three-dimensional articles produced using the curable compositions of the present disclosure and in accordance with the methods described herein have a water absorption, measured in accordance with ASTM D570-98, after 24 hours in room temperature distilled water, of less than or equal to 1.5% by weight, less than or equal to 1.25% by weight, less than or equal to 0.75% by weight, less than or equal to 0.5% by weight, less than or equal to 0.4% by weight, or less than or equal to 0.3% by weight.

In embodiments, the three-dimensional articles produced using the curable compositions of the present disclosure and in accordance with the methods described herein have an ash content, measured in accordance with ASTM E1131-08, of less than or equal to 0.25% by weight, less than or equal to 0.2% by weight, less than or equal to 0.15% by weight, less than or equal to 0.1% by weight, less than or equal to 0.05% by weight, less than or equal to 0.04% by weight, less than or equal to 0.03% by weight, less than or equal to 0.02% by weight, less than or equal to 0.01% by weight.

### Investment Casting

As described above, three-dimensional articles produced using the curable compositions of the present disclosure and in accordance with the methods described herein may be used as sacrificial foundry patterns for investment casting operations to produce cast articles, in particular cast metal articles. The production of high-quality precision metal parts via investment casting requires the production and use of high-quality molds. In order to produce high-quality molds in an investment casting process, it is important that 3D printed articles used as sacrificial foundry patterns exhibit specific material properties. For example, 3D printed sacrificial foundry patterns exhibiting low strength or modulus may warp or break prior to and during the mold fabrication process, thereby causing the resulting mold cavity to deviate from desired shape, which leads to poor dimensional accuracy for subsequently cast metal parts. Moreover, for the investment casting of large parts such as those used in aerospace applications (e.g., components for gas turbine engines), large molds must be produced, thereby requiring large 3D printed sacrificial foundry patterns. As gravitational and shrinkage related stresses are exacerbated in larger 3D printed patterns, high green strength and high green modulus are desired properties both during 3D printing and for the resulting 3D printed patterns. Many of the existing curable compositions are not suitable for producing large 3D printed sacrificial foundry patterns due to insufficient green strength and/or modulus, or require time- and resource-consuming post-processing steps to improve the mechanical properties of the 3D printed sacrificial foundry patterns.

The mold is built up around the pattern by well-known processes, which typically involves coating the pattern with several coats of a ceramic slurry or other refractory material, with a drying step between each coating step. Accordingly, because refractory materials used in investment casting processes are often initially in the form of an aqueous solution, cured curable compositions exhibiting high water absorption may lead to reduced dimensional accuracy of the resulting mold, which will translate to reduced dimensional accuracy for subsequently cast metal parts. Further, 3D printed sacrificial foundry patterns that leave behind significant levels of ash in the mold upon being removed from the mold via burnout may cause contamination of the surface of subsequently cast metal parts, thereby leading to unacceptable deviations in material properties for the cast metal parts.

The curable compositions of the present disclosure can be used in 3D printing applications to produce three-dimensional articles exhibiting high green strength and modulus, as well as low water absorption and low ash content, thus making them particularly suitable for the investment casting operations to produce large metal parts. Without intending to be limited by theory, it is believed that the high green strength and modulus of three-dimensional articles formed by the curable compositions described herein is at least partially attributable to the combination of the high weight percent of the radically polymerizable component, the multifunctional (meth)acrylate content of the radically polymerizable component, and the use of a sulfonium borate cationic photoinitiator. Moreover, in addition to improving the mechanical properties of 3D printed articles in the green state, the use of the sulfonium borate cationic photoinitiator allows for the substantial elimination of phosphorous-containing compounds present in many conventional cationic photoinitiators. Without intending to be bound by theory, the curable compositions described herein are believed to exhibit low ash content after burnout as a result of the minimized presence of phosphorous-containing compounds. Therefore, three-dimensional articles produced using the curable compositions described herein are substantially free of phosphorous-containing compounds and antimony-containing compounds while also exhibiting high green strength and green modulus without the need for post-curing processes.

Methods for making a mold may comprise investing a three-dimensional article produced using the curable compositions of the present disclosure and in accordance with the methods described herein in a refractory material to create an investment which is then heated to remove the three-dimensional article. The investment may be placed in a furnace, wherein the three-dimensional article is burned out of the resulting mold. Using the mold prepared in this manner, methods for making a metal part may comprise casting molten metal into the mold and cooling the metal to solidify the molten metal and form the metal part. After solidification, the mold is broken away to release the finished metal part.

### ASPECTS

Aspect 1. A curable composition comprising: a cationically polymerizable component; a sulfonium borate cationic photoinitiator; a radically polymerizable component present in an amount greater than or equal to 40% by weight, based on the total weight of the polymerizable components, wherein the total weight of the polymerizable components is the sum of the total weight of the radically polymerizable component in the curable composition and the total weight cationically polymerizable component in the curable composition; and a radical photoinitiator, wherein: the radically polymerizable component comprises a (meth)acrylate-functionalized monomer, a (meth)acrylate-functionalized oligomer, or both, each having at least two (meth)acrylate functional groups; and the (meth)acrylate-functionalized monomer and the (meth)acrylate-functionalized oligomer are present in a combined amount greater than or equal to 50% by weight, based on the total weight of radically polymerizable component in the curable composition.

Aspect 2. The curable composition of Aspect 1, wherein the (meth)acrylate-functionalized monomer is selected from the group consisting of tricyclodecane dimethanol diacrylate, pentanediol di(meth)acrylate, hexanediol di(meth)acrylate, octanediol di(meth)acrylate, decanediol di(meth)acrylate, bisphenol A di(meth)acrylate, polyethylene glycol di(meth)acrylate, dipropylene glycol di(meth)acrylate, tripropylene glycol di(meth)acrylate, neopentyl glycol hydroxypivalate di(meth)acrylate, alkoxylated derivatives thereof, and combinations thereof.

Aspect 3. The curable composition of Aspect 1 or 2, wherein the (meth)acrylate-functionalized monomer and the (meth)acrylate-functionalized oligomer are present in a combined amount from 60% to 85% by weight, based on the total weight of radically polymerizable component in the curable composition.

Aspect 4. The curable composition of any one of Aspects 1 to 3, wherein the sulfonium borate cationic photoinitiator comprises triarylsulfonium cation.

Aspect 5. The curable composition of any one of Aspects 1 to 4, wherein the sulfonium borate cationic photoinitiator comprises an R-substituted aromatic thioether triarylsulfonium cation of the structure 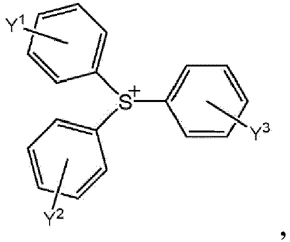 wherein Y¹, Y², and Y³ are the same or different, and wherein Y¹, Y², or Y³ are R-substituted aromatic thioether with R being an acetyl or aryl group.

Aspect 6. The curable composition of any one of Aspects 1 to 5, wherein the sulfonium borate cationic photoinitiator comprises a tetrafluoroborate anion, a tetrakis(pentafluorophenyl)borate anion, or combinations thereof.

Aspect 7. The curable composition of any one of Aspects 1 to 6, wherein the sulfonium borate cationic photoinitiator is selected from the group consisting of tris(4-(4-acetylphenyl)thiophenyl)sulfonium tetrakis(pentafluorophenyl)borate, diphenyl[4-(phenylthio)phenyl]sulfonium tetrakis(pentafluorophenyl)borate, (thiodi-4,1-phenylene)bis[bis(4-methylphenyl)] sulfonium bis [tetrakis(pentafluorophenyl)borate], (4- { [4-(diphenylsulfanylium)phenyl] sulfanyl }phenyl)diphenylsulfonium bis[tetrakis(pentafluorophenyl)borate], triphenylsulfonium tetrafluoroborate, dimethylphenacylsulfonium tetrafluoroborate, and combinations thereof.

Aspect 8. The curable composition of any one of Aspects 1 or 3 to 7, wherein the (meth)acrylate-functionalized monomer, the (meth)acrylate-functionalized oligomer, or both having at least two (meth)acrylate functional groups have at least three (meth)acrylate functional groups.

Aspect 9. The curable composition of Aspect 8, wherein the (meth)acrylate-functionalized monomer is selected from the group consisting of trimethylolpropane tri(meth)acrylate, pentaerythritol tri(meth)acrylate, glyceryl tri(meth)acrylate, alkoxylated derivatives thereof, and combinations thereof.

Aspect 10. The curable composition of any one of Aspects 1 or 3 to 7, wherein the (meth)acrylate-functionalized monomer, the (meth)acrylate-functionalized oligomer, or both having at least two (meth)acrylate functional groups have at least four (meth)acrylate functional groups.

Aspect 11. The curable composition of Aspect 10, wherein the (meth)acrylate-functionalized monomer is selected from the group consisting of di(trimethylolpropane) tetra(meth)acrylate, pentaerythritol tetra(meth)acrylate, dipentaerythritol penta(meth)acrylate, alkoxylated derivatives thereof, and combinations thereof.

Aspect 12. The curable composition of any one of Aspects 1 to 11, wherein the radical photoinitiator comprises an acetophenone, a benzophenone, or both.

Aspect 13. The curable composition of Aspect 12, wherein the radical photoinitiator is selected from the group consisting of 2,2-dimethoxy-2-phenylacetophenone, 2-hydroxy-2-methyl-1-phenyl-propanone, 1-hydroxycyclohexyl phenyl ketone, 1-[4-(2-hydroxyethoxy)-phenyl]-2-hydroxy-2-methyl-1-propane-1-one, oligo[2-hydroxy-2-methyl-1-[4-(1-methylvinyl)phenyl]propanone], 2-methylbenzophenone, 4-methylbenzophenone, methyl-2-benzoylbenzoate, 4-phenylbenzophenone, 4-benzoyl-4'-methyldiphenyl sulphide, and combinations thereof.

Aspect 14. The curable composition of any one of Aspects 1 to 13, wherein the cationically polymerizable component comprises an epoxide-functionalized compound, an oxetane-functionalized compound, or both.

Aspect 15. The curable composition of Aspect 14, wherein the epoxide-functionalized compound is selected from the group consisting of 3,4-epoxycyclohexylmethyl 3',4'-epoxycyclohexanecarboxylate, bis[(3,4-epoxycyclohexyl)methyl]adipate, bisphenol A diglycidyl ether, hydrogenated bisphenol A diglycidyl ether, 1,4-butanediol diglycidyl ether, trimethylolpropane triglycidyl ether, dicyclopentadiene diepoxide, 3,4-epoxycyclohexyl methyl methacrylate, tetrahydrophthalic acid diglycidyl ester, hexahydrophthalic acid diglycidyl ester, 4,5-epoxytetrahydrophthalic acid diglycidyl ester, pentaerythritol tetraglycidyl ether, vinylcyclohexane dioxide, and combinations thereof.

Aspect 16. The curable composition of Aspect 14 or 15, wherein the oxetane-functionalized compound is selected from the group consisting of 3-ethyloxetane-3-methanol, 3-ethyl-3-[(2-ethylhexyloxy)methyl]oxetane, 3-ethyl-3-[(phenylmethoxy)methyl]-oxetane, 1,4-bis[(3-ethyl-3-oxetanylmethoxy)methyl]benzene, 4,4-bis(3-ethyl-3-oxetanyl)methoxymethyl]biphenyl, 3-ethyl-3-(methacryloyloxy)methyloxetane, 3-ethyl-3[[(3-ethyloxetane-3-yl)methoxy]methyl]oxetane, and combinations thereof.

Aspect 17. The curable composition of any one of Aspects 1 to 16, wherein the curable composition is substantially free of any phosphorous-containing compound.

Aspect 18. The curable composition of any one of Aspects 1 to 17, wherein the curable composition is substantially free of any antimony-containing compound.

Aspect 19. The curable composition of any one of Aspects 1 to 18, further comprising a stabilizer.

Aspect 20. The curable composition of any one of Aspects 1 to 19, wherein the curable composition is substantially free of thermoplastics.

Aspect 21. The curable composition of any one of Aspects 1 to 20, wherein the radically polymerizable component is present in an amount greater than or equal to 41% by weight, based on the total weight of the polymerizable components.

Aspect 22. The curable composition of any one of Aspects 1 to 21, wherein the radically polymerizable component is present in an amount greater than or equal to 42.5% by weight, based on the total weight of the polymerizable components.

Aspect 23. The curable composition of any one of Aspects 1 to 22, wherein the radically polymerizable component is present in an amount greater than or equal to 45% by weight, based on the total weight of the polymerizable components.

Aspect 24. The curable composition of any one of Aspects 1 to 23, wherein the radically polymerizable component is present in an amount greater than or equal to 50% by weight, based on the total weight of the polymerizable components.

Aspect 25. The curable composition of any one of Aspects 1 to 24, wherein the radically polymerizable component is present in an amount greater than 50% by weight, based on the total weight of the polymerizable components.

Aspect 26. The curable composition of any one of Aspects 1 to 25, wherein the cationically polymerizable component is present in an amount from 1% to 60% by weight, based on the total weight of the polymerizable components.

Aspect 27. The curable composition of any one of Aspects 1 to 26, wherein the sulfonium borate cationic photoinitiator is present in an amount from 0.01% to 10% by weight, based on the total weight of cationically polymerizable component in the curable composition. Aspect 28. The curable composition of any one of Aspects 1 to 27, wherein the radical photoinitiator is present in an amount from 0.01% to 10% by weight, based on the total weight of radically polymerizable component in the curable composition.

Aspect 29. A method of making a three-dimensional article, comprising curing the curable composition of any one of Aspects 1 to 28.

Aspect 30. A method of making a three-dimensional article, comprising printing the three-dimensional article using the curable composition of any one of Aspects 1 to 28.

Aspect 31. The method of Aspect 30, wherein printing the three-dimensional article comprises: a) providing a first layer of the curable composition onto a surface; b) curing the first layer, at least partially, to provide a cured first layer; c) providing a second layer of the curable composition onto the first cured layer; d) curing the second layer, at least partially, to provide a cured second layer adhered to the cured first layer; and e) repeating steps c) and d) a desired number of times to build up the three-dimensional article.

Aspect 32. The method of any one of Aspects 29 to 31, wherein a post-curing step is not performed.

Aspect 33. The three-dimensional article obtained by the method of any one of Aspects 29 to 32.

Aspect 34. The three-dimensional article of Aspect 33, wherein the three-dimensional article comprises a green strength of greater than or equal to 40 MPa, measured in accordance with ASTM D882-18.

Aspect 35. The three-dimensional article of Aspect 33 or 34, wherein the three-dimensional article comprises a green modulus of greater than or equal to 800 MPa, measured in accordance with ASTM D882-18.

Aspect 36. The three-dimensional article of any one of Aspects 33 to 35, wherein the three-dimensional article has a water absorption, measured in accordance with ASTM D570-98, after 24 hours in room temperature distilled water, of less than or equal to 0.75% by weight.

Aspect 37. The three-dimensional article of any one of Aspects 33 to 36, wherein the three-dimensional article has an ash content, measured in accordance with ASTM E1131-08, of less than or equal to 0.05% by weight.

Aspect 38. A method of making a mold, comprising: investing the three-dimensional article of any one of Aspects 33 to 37 in a refractory material to create an investment; heating the investment to remove the three-dimensional article.

Aspect 39. A method of making a metal part, comprising: casting molten metal into the mold made by Aspect 38; and cooling the molten metal to solidify the molten metal and form the metal part.

Aspect 40. A method of making a metal part, comprising: making a mold by: investing a three-dimensional article in a refractory material to create an investment, wherein the three-dimensional article is made by curing the curable composition of any one of Aspects 1 to 28; and heating the investment to remove the three-dimensional article and produce the mold; casting molten metal into the mold; and cooling the molten metal to solidify the molten metal and form the metal part.

Aspect 41. The curable composition of any one of Aspects 1 to 27, wherein the radically polymerizable component further comprises a monofunctional (meth)acrylate-functionalized monomer, a monofunctional (meth)acrylate-functionalized oligomer, or both.

### EXAMPLES

The following examples are provided to illustrate embodiments described in this disclosure and are not intended to limit the scope of this disclosure or its appended claims.

### Materials

Raw materials used in the examples are listed below in Table 1.

**Table 1**

| Component Name | Chemical Name |
|---|---|
| SR494 | Ethoxylated pentaerythritol tetraacrylate |
| SR355 | Di(trimethylolpropane) tetraacrylate |
| SR295 | Pentaerythritol tetraacrylate |
| SR454 | Ethoxylated (3 EO) trimethylolpropane triacrylate |
| SR561 | Ethoxylated (5 EO) hexanediol diacrylate |
| SR256 | 2-(2-ethoxyethoxy) ethyl acrylate |
| SR833S | Tricyclodecane dimethanol diacrylate |
| Uvicure S105 | 3,4-epoxycyclohexylmethyl 3,4-epoxycyclohexanecarboxylate |
| Uvicure S128 | Bis((3,4-epoxycyclohexyl)methyl)adipate |
| Uvicure S130 | 3-Ethyloxetane-3-methanol |
| OXT 212 | 3-Ethyl-3-[(2-ethylhexyloxy)methyl]oxetane |
| Speedcure BKL | 2,2-dimethoxy-2-phenylacetophenone |
| Irgacure 290 | Tris(4-(4-acetylphenyl)thiophenyl)sulfonium tetrakis(pentafluorophenyl)borate |
| Speedcure 992 | Bis(4-(diphenylsulfonio)phenyl)sulfide bis(hexafluorophosphate) |
| Speedcure 939 | 4-isopropyl-4 -methyldiphenyliodonium tetrakis(pentafluorophenyl)borate |

### Preparation of Samples

Curable compositions 1-15 in Table 2 below were produced by combining the listed components in provided relative proportions (weight percent basis) and stirring via magnetic stir plate at room temperature until all solids were dissolved and homogeneous compositions were achieved (roughly 1-4 hours). The prepared compositions were then used to 3D print tensile bars for mechanical testing and samples for water absorption measurements.

The 3D printed tensile bars were prepared to mimic "thin films" in accordance with ASTM D882-18. The tensile bars were printed to have dimensions of 0.6 mm × 13 mm × 100 mm (thickness × width × length). The tensile bars were printed directly onto a glass plate without support structures. For each tensile bar, a coating of the curable composition was applied to the glass plate using a 5 mils film applicator, then the first layer of the three-dimensional thin film was irradiated using a 355 nm solid state laser that emits a beam with an irradiance of 750 mW/cm². This beam produced an energy dosage of approximately 75 mJ/cm² in a cross-fill pattern. After curing the first layer, an additional coating of the curable composition was applied on top of the cured first layer using a 10 mils film applicator - creating the second layer 5 mils in thickness and giving the 'thin film' a total thickness of 10 mils. The second layer was irradiated in the same manner as the first, and the process was repeated for a total of six layers, each being 5 mils thick. After the last layer, the cured articles were removed from the glass plate. Four cured articles ("thin films") were printed for all tested compositions.

The samples for water absorption measurements were prepared as three-dimensional disks having a diameter of 50.8 mm (2") and a thickness of 3 mm. The disk was oriented at a 45-degree angle relative to the XY plane, supported structures were added to the bottom surface, and printed using a standard method on a top-down 355 nm SLA printer (RAPLAS PR 450) with layer thickness of 100 µm. The laser power was set to 750 mW/cm², applying an energy dosage of approximately 75 mJ/cm² in a single-fill pattern. The samples were post-cured for 60 minutes each side in a low-intensity rotational post-cure apparatus supplying UV light irradiance of 10-20 mW/cm².

**Table 2**

| | **Acrylate Content & Catalyst Selection** | | | | | | | |
|---|---|---|---|---|---|---|---|---|
| **Curable Composition Sample** | **1** | **2** | **3** | **4** | **5** | **6** | **7*** | |
| **Radically polymerizable component** | | | | | | | | |
| SR494 (f=4) | 10 | 25 | 50 | 10 | 25 | 50 | 50 | |
| SR355 (f=4) | | | | | | | | |
| SR295 (f=4) | | | | | | | | |
| SR454 (f=3) | | | | | | | | |
| SR561 (f=2) | | | | | | | | |
| SR833S (f=2) | | | | | | | | |
| SR256 (f--1) | | | | | | | | |

| **Radical photoinitiator** | | | | | | | | |
|---|---|---|---|---|---|---|---|---|
| Speedcure BKL | 4 | 4 | 4 | 4 | 4 4 | | 4 | |

| **Cationically polymerizable component** | | | | | | | | |
|---|---|---|---|---|---|---|---|---|
| Uvicure S105 | 63 | 52 | 35 | 63 | 52 | 35 | 35 | |
| Uvicure S128 | | | | | | | | |
| Uvicure S130 | 27 | 23 | 15 | 27 | 23 | 15 | 15 | |
| OXT 212 | | | | | | | | |

| **Cationic photoinitiator** | | | | | | | | |
|---|---|---|---|---|---|---|---|---|
| Irgacure 290 | 0.3 | 0.3 | 0.3 | | | | | |
| Speedcure 992 | | | | 0.3 | 0.3 | 0.3 | | |
| Speedcure 939 | | | | | | | 2 | |
| * Sample 7 was unstable and would spontaneously cure within a matter of days. | | | | | | | | |

| | **Different Monomer Structures and Acrylate Functionalities** | | | | | | | |
|---|---|---|---|---|---|---|---|---|
| **Curable Composition Sample** | **8** | **9** | **10** | **11** | **12** | **13** | **14*** | **15** |
| **Radically polymerizable component** | | | | | | | | |
| SR494 (f=4) | | | 50 | | | | | 25 |
| SR355 (f=4) | 50 | | | | | | | |
| SR295 (f=4) | | 50 | | | | | | |
| SR454 (f=3) | | | | 50 | | | | |
| SR561 (f=2) | | | | | 50 | | | |
| SR833S (f=2) | | | | | | 50 | | 25 |
| SR256 (f=1) | | | | | | | 50 | |

| **Radical photoinitiator** | | | | | | | | |
|---|---|---|---|---|---|---|---|---|
| Speedcure BKL | 4 | 4 | 4 | 4 | 4 | 4 | 4 | 4 |

| **Cationically polymerizable component** | | | | | | | | |
|---|---|---|---|---|---|---|---|---|
| Uvicure S105 | 35 | 35 | | 35 | 35 | 35 | 35 | 35 |
| Uvicure S128 | | | 35 | | | | | |
| Uvicure S130 | 15 | 15 | 15 | 15 | 15 | 15 | 15 | 15 |
| OXT 212 | | | | | | | | |

| **Cationic photoinitiator** | | | | | | | | |
|---|---|---|---|---|---|---|---|---|
| Irgacure 290 | 0.3 | 0.3 | 0.3 | 0.3 | 0.3 | 0.3 | 0.3 | 0.3 |
| Speedcure 992 | | | | | | | | |
| Speedcure 939 | | | | | | | | |

### Testing Methods

To evaluate the mechanical properties of the three-dimensional articles printed from the curable composition samples, the green strength and green modulus of 3D printed tensile bars were measured in accordance with ASTM D882-18. The green strength and green modulus measurements were performed using a Test Resources Universal Testing Apparatus fitted with manual wedge clamps. The pull rate was 5 mm/min. Prior to testing, the 3D printed tensile bars were conditioned at room temperature for 18 to 24 hours.

For selected samples, water absorption measurements were performed in accordance with ASTM D570-98, wherein the samples were placed in room temperature distilled water for 24 hours before determining the water absorption on a weight percent basis.

### Results

The mechanical properties and water absorption results for the curable composition samples are provided below in Table 3. Fields including a "-" indicates that the corresponding formulation cured too poorly to be tested.

**Table 3**

| **Curable Composition Sample** | **1** | **2** | | **3** | | **4** | | **5** | | **6** | | **7** |
|---|---|---|---|---|---|---|---|---|---|---|---|---|
| **Mechanical Properties** (**ASTM D882-18**) | | | | | | | | | | | | |
| Green Strength (MPa) | - | 53.4 | | 53.5 | | - | | 0.9 | | 0.81 | | 57 |
| Green Modulus (MPa) | - | 1250 | | 1270 | | - | | 1.95 | | 32.2 | | 2640 |

| **Water Absorption** (**ASTM D570-98, RT water**) | | | | | | | | | | | | |
|---|---|---|---|---|---|---|---|---|---|---|---|---|
| 24 hours (% weight gain) | | | | 0.71 | | | | | | | | |

| Table 3 (continued) | | | | | | | | | | | | |
|---|---|---|---|---|---|---|---|---|---|---|---|---|
| **Curable Composition Sample** | **8** | **9** | **10** | | **11** | | **12** | | **13** | | **14** | **15** |
| **Mechanical Properties** (**ASTM D882-18**) | | | | | | | | | | | | |
| Green Strength (MPa) | - | - | 31.2 | | 45.4 | | 17 | | 47 | | - | 49 |
| Green Modulus (MPa) | - | - | 934 | | 977 | | 377 | | 1580 | | - | 1470 |

| **Water Absorption** (**ASTM D570-98, RT water**) | | | | | | | | | | | | |
|---|---|---|---|---|---|---|---|---|---|---|---|---|
| 24 hours (% weight gain) | | | | | | | | | 0.28 | | | 0.42 |

As can be seen from Tables 2 and 3 above, three-dimensional articles produced from curable compositions having less than 40% by weight of the radically polymerizable component, based on the total weight of the polymerizable components, demonstrated poor green strength and green modulus properties. Three-dimensional articles produced from curable compositions having greater than 40% by weight of the radically polymerizable component but comprising greater than 50% monofunctional meth(acrylates) for the radically polymerizable component (e.g., Example 14), failed to produce three-dimensional articles capable of being tested under ASTM D882-18. Moreover, curable compositions not comprising sulfonium borate cationic photoinitiators either resulted in unstable curable compositions that cured too quickly (Example 7) or demonstrated low green strength and green modulus properties (Examples 5 and 6).

One skilled in the art would understand that there may be (meth)acrylate-functionalized monomers and oligomers that despite being multifunctional, possess other characteristics such that, if used in a curable composition in certain amounts, will degrade the mechanical properties such as green strength and green modulus of three-dimensional articles produced from these curable compositions. For example, (meth)acrylate-functionalized monomers known to have a low glass transition temperature and/or modulus may be unsuitable for use in curable compositions wherein high green strength and green modulus is desired. Comparative Example 12 illustrates this point with the use of SR561, an ethoxylated (5 EO) hexanediol diacrylate having a glass transition temperature of -40°C as the (meth)acrylate-functionalized monomer, which despite being a multifunctional monomer, results in a green strength and green modulus for the 3D printed part below the other curable compositions comprising greater than 50% multifunctional meth(acrylates) for the radically polymerizable component.

Moreover, as can be seen from Tables 2 and 3 above, the curable compositions of the present disclosure, when used to prepare 3D printed articles, result in 3D printed articles demonstrating low water absorption, which is beneficial for investment casting.

It should be understood that any two quantitative values assigned to a property may constitute a range of that property, and all combinations of ranges formed from all stated quantitative values of a given property are contemplated in this disclosure.

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

While particular embodiments of the present invention have been illustrated and described, those skilled in the art would understand that various other changes and modifications can be made without departing from the spirit and scope of the invention.

## Claims

1. A curable composition comprising:
a cationically polymerizable component;
a sulfonium borate cationic photoinitiator;
a radically polymerizable component present in an amount greater than or equal to 40% by weight, based on the total weight of the polymerizable components, wherein the total weight of the polymerizable components is the sum of the total weight of the radically polymerizable component in the curable composition and the total weight of the cationically polymerizable component in the curable composition; and
a radical photoinitiator,
wherein:
the radically polymerizable component comprises a (meth)acrylate-functionalized monomer, a (meth)acrylate-functionalized oligomer, or both, each having at least two (meth)acrylate functional groups; and
the (meth)acrylate-functionalized monomer and the (meth)acrylate-functionalized oligomer are present in a combined amount greater than or equal to 50% by weight, based on the total weight of radically polymerizable component in the curable composition.

2. The curable composition of claim 1, wherein the (meth)acrylate-functionalized monomer and the (meth)acrylate-functionalized oligomer are present in a combined amount from 60% to 85% by weight, based on the total weight of radically polymerizable component in the curable composition.

3. The curable composition of claim 1 or 2, wherein the cationically polymerizable component comprises an epoxide-functionalized compound, an oxetane-functionalized compound, or both.

4. The curable composition of any one of claims 1 to 3, wherein the curable composition is substantially free of any phosphorous-containing compound.

5. The curable composition of any one of claims 1 to 4, wherein the curable composition is substantially free of any antimony-containing compound.

6. The curable composition of any one of claims 1 to 5, wherein the curable composition is substantially free of thermoplastics.

7. The curable composition of any one of claims 1 to 6, wherein the radically polymerizable component is present in an amount greater than or equal to 45% by weight, based on the total weight of the polymerizable components.

8. The curable composition of any one of claims 1 to 7, wherein the cationically polymerizable component is present in an amount from 1% to 60% by weight, based on the total weight of the polymerizable components.

9. The curable composition of any one of claims 1 to 8, wherein the radically polymerizable component further comprises a monofunctional (meth)acrylate-functionalized monomer, a monofunctional (meth)acrylate-functionalized oligomer, or both.

10. A method of making a three-dimensional article, comprising curing the curable composition of any one of claims 1 to 9.

11. The method of claim 10, wherein curing the three-dimensional article comprises:
a) providing a first layer of the curable composition onto a surface;
b) curing the first layer, at least partially, to provide a cured first layer;
c) providing a second layer of the curable composition onto the first cured layer;
d) curing the second layer, at least partially, to provide a cured second layer adhered to the cured first layer; and
e) repeating steps c) and d) a desired number of times to build up the three-dimensional article.

12. The three-dimensional article obtained by the method claim 10 or 11.

13. A method of making a mold, comprising:
investing the three-dimensional article of claim 12 in a refractory material to create an investment; and
heating the investment to remove the three-dimensional article.

14. A method of making a metal part, comprising:
casting molten metal into the mold made by claim 13; and
cooling the molten metal to solidify the molten metal and form the metal part.

15. A method of making a metal part, comprising:
making a mold by:
investing a three-dimensional article in a refractory material to create an investment, wherein the three-dimensional article is made by curing the curable composition of any one of claims 1 to 9; and
heating the investment to remove the three-dimensional article and produce the mold;
casting molten metal into the mold; and
cooling the molten metal to solidify the molten metal and form the metal part.
